# EUROPEAN PATENT APPLICATION

(11) **EP 2 806 602 A1**
(43) Date of publication of application: **26.11.2014**
(21) Application number: 13802215.7
(22) Date of filing: 04.02.2013
(51) Int. Cl.: H04L 12/70, H04L 29/06

(54) **FEATURE EXTRACTION DEVICE, NETWORK TRAFFIC IDENTIFICATION METHOD, DEVICE AND SYSTEM.**

(71) Applicant: Huawei Technologies Co., Ltd, Shenzhen, Guangdong 518129 (CN)
(72) Inventor: HOROVITZ, Shay, Shenzhen, Guangdong 518129 (CN); LI, Peisong, Shenzhen, Guangdong 518129 (CN); ARIAN, Yair, Shenzhen, Guangdong 518129 (CN)
(74) Representative: Pfenning, Meinig & Partner GbR
(86) International application number: PCT/CN2013/071346
(87) International publication number: WO 2014/117406

(57) **Abstract**

Embodiments of the present invention provide a feature extraction apparatus, and a network traffic identification method, apparatus, and system. An unidentified data stream sent by a traffic identification apparatus is received, and behavior features of the unidentified data stream are extracted to obtain a traffic behavior feature of the unidentified data stream; the traffic behavior feature is sent to the traffic identification apparatus, so that the traffic identification apparatus identifies the unidentified data stream according to the traffic behavior feature. Therefore, the behavior feature extraction efficiency is high, and the identification ratio of data streams in the existing network is improved.

## Description

### TECHNICAL FIELD

Embodiments of the present invention relate to communications technologies, and in particular, to a feature extraction apparatus, and a network traffic identification method, apparatus, and system.

### BACKGROUND

With fast development of Internet technologies, new network applications emerge one after another, and intelligent management of data streams in a network becomes increasingly important. However, before intelligent management of data streams is performed, it is necessary to first identify the types of the data streams.

In the prior art, packet capturing is performed in advance to capture data packets of a data stream, and then a manual offline analysis is performed on the obtained data packets to identify an application (Application) to which the data stream belongs. However, this manual analysis manner in the prior art largely depends on people's capability and experience, and the feature analysis efficiency is not high, and the identification ratio of data streams in the existing network cannot be improved effectively.

### SUMMARY

Embodiments of the present invention provide a feature extraction apparatus, and a network traffic identification method, apparatus, and system, so as to solve the problems of dependence on a data packet in a data stream identification process, low accuracy of a manual analysis, and low analysis efficiency, and improve the identification ratio.

In a first aspect, an embodiment of the present invention provides a network traffic identification method, including:
receiving an unidentified data stream sent by a traffic identification apparatus, where the unidentified data stream is a data stream unidentifiable to the traffic identification apparatus;
extracting behavior features of the unidentified data stream to obtain a traffic behavior feature of the unidentified data stream, where the traffic behavior feature is a behavior feature that can uniquely identify the unidentified data stream; and
sending the traffic behavior feature to the traffic identification apparatus, so that the traffic identification apparatus identifies the unidentified data stream according to the traffic behavior feature.

According to the first aspect, in a first possible implementation, the extracting behavior features of the unidentified data stream to obtain a traffic behavior feature of the unidentified data stream includes:
obtaining key information of the unidentified data stream;
preprocessing the key information to generate linked-list feature node information for feature clustering; and
performing a cluster analysis on the linked-list feature node information to obtain the traffic behavior feature of the unidentified data stream.

According to the first possible implementation, in a second possible implementation, the preprocessing the key information to generate linked-list feature node information for feature clustering includes:
if the amount of the unidentified data stream reaches a preset value, preprocessing the key information of the unidentified data stream to generate the linked-list feature node information required for feature clustering;
the performing a cluster analysis on the linked-list feature node information to obtain the traffic behavior feature of the unidentified data stream includes:
   performing a cluster analysis on the linked-list feature node information to obtain feature keywords of the unidentified data stream; and
   screening the obtained feature keywords to reserve a valid feature keyword as the traffic behavior feature of the unidentified data stream.

According to the first possible implementation or the second possible implementation, in a third possible implementation, the preprocessing the key information of the unidentified data stream to generate the linked-list feature node information required for feature clustering includes:
loading feature identification dimension information, where the feature identification dimension information is used to describe feature information that needs to be extracted from the data stream;
obtaining, from the key information of the unidentified data stream, information corresponding to the feature identification dimension information, and converting the obtained information into the linked-list feature node information required for feature clustering; and
releasing the feature identification dimension information.

According to any one of the first to third possible implementations, in a fourth possible implementation, the sending the traffic behavior feature to the traffic identification apparatus includes:
determining whether the traffic behavior feature satisfies a quality decision condition, and if so, sending the traffic behavior feature to the traffic identification apparatus, or if not, discarding the traffic behavior feature.

According to the fourth possible implementation, in a fifth possible implementation, the determining whether the traffic behavior feature satisfies a quality decision condition includes:
determining whether a feature coverage ratio of the traffic behavior feature is greater than a first threshold; and/or
determining whether coverage traffic of the traffic behavior feature is greater than a second threshold; and/or
determining whether a wrong identification ratio of the traffic behavior feature is greater than a third threshold.

In a second aspect, an embodiment of the present invention provides a network traffic identification method, including:
receiving a data stream sent by an application program;
if the data stream is an unidentified data stream, sending the unidentified data stream to a feature extraction apparatus, so that the feature extraction apparatus extracts behavior features of the unidentified data stream to obtain a traffic behavior feature of the unidentified data stream;
receiving the traffic behavior feature sent by the feature extraction apparatus; and
identifying the unidentified data stream according to the traffic behavior feature.

According to the second aspect, in a first possible implementation, the identifying the unidentified data stream according to the traffic behavior feature includes:
identifying the unidentified data stream by querying a correspondence table between a traffic behavior feature and an application program.

According to the second aspect or the first possible implementation, in a second possible implementation, after the identifying the unidentified data stream according to the traffic behavior feature, the method further includes:
performing, according to a data stream identification result, policy control on the data stream sent by the application program.

In a third aspect, an embodiment of the present invention provides a feature extraction apparatus, including:
a receiving module, configured to receive an unidentified data stream sent by a traffic identification apparatus, where the unidentified data stream is a data stream unidentifiable to the traffic identification apparatus;
a processing module, configured to extract behavior features of the unidentified data stream to obtain a traffic behavior feature of the unidentified data stream, where the traffic behavior feature is a behavior feature that can uniquely identify the unidentified data stream; and
a sending module, configured to send the traffic behavior feature to the traffic identification apparatus, so that the traffic identification apparatus identifies the unidentified data stream according to the traffic behavior feature.

According to the third aspect, in a first possible implementation, the processing module specifically includes:
an obtaining unit, configured to obtain key information of the unidentified data stream;
a preprocessing unit, configured to preprocess the key information obtained by the obtaining unit to generate linked-list feature node information for feature clustering; and
a cluster analysis unit, configured to perform a cluster analysis on the linked-list feature node information to obtain the traffic behavior feature of the unidentified data stream.

According to the first possible implementation, in a second possible implementation, the preprocessing unit is specifically configured to: if the amount of the unidentified data stream reaches a preset value, preprocess the key information of the unidentified data stream to generate the linked-list feature node information required for feature clustering; and
the cluster analysis unit is specifically configured to perform a cluster analysis on the linked-list feature node information to obtain feature keywords of the unidentified data stream, and screen the obtained feature keywords to reserve a valid feature keyword as the traffic behavior feature of the unidentified data stream.

According to the first possible implementation or the second possible implementation, in a third possible implementation, the preprocessing unit is specifically configured to: load feature identification dimension information, where the feature identification dimension information is used to describe feature information that needs to be extracted from the data stream; obtain, from the key information of the unidentified data stream, information corresponding to the feature identification dimension information, and convert the obtained information into the linked-list feature node information required for feature clustering; and release the feature identification dimension information.

According to any one of the first to third possible implementations, in a fourth possible implementation, the sending module is specifically configured to determine whether the traffic behavior feature satisfies a quality decision condition, and if so, send the traffic behavior feature to the traffic identification apparatus, or if not, discard the traffic behavior feature.

According to the fourth possible implementation, in a fifth possible implementation, the processing module is specifically configured to: determine whether a feature coverage ratio of the traffic behavior feature is greater than a first threshold, and if so, send the traffic behavior feature to the traffic identification apparatus, or if not, discard the traffic behavior feature; and/or determine whether coverage traffic of the traffic behavior feature is greater than a second threshold, and if so, send the traffic behavior feature to the traffic identification apparatus, or if not, discard the traffic behavior feature; and/or
determine whether a wrong identification ratio of the traffic behavior feature is greater than a third threshold, and if so, send the traffic behavior feature to the traffic identification apparatus, or if not, discard the traffic behavior feature.

In a fourth aspect, an embodiment of the present invention provides a traffic identification apparatus, including:
a receiving module, configured to receive a data stream sent by an application program;
a sending module, configured to: if the data stream is an unidentified data stream, send the unidentified data stream to a feature extraction apparatus, so that the feature extraction apparatus extracts behavior features of the unidentified data stream to obtain a traffic behavior feature of the unidentified data stream;
where the receiving module is further configured to receive the traffic behavior feature sent by the feature extraction apparatus; and
a processing module, configured to identify the unidentified data stream according to the traffic behavior feature received by the receiving module.

According to the fourth aspect, in a first possible implementation, the processing module is specifically configured to identify the unidentified data stream by querying a correspondence table between a traffic behavior feature and an application program.

According to the fourth aspect or the first possible implementation, in a second possible implementation, the processing module is further configured to: after identifying the unidentified data stream according to the traffic behavior feature, perform, according to a data stream identification result, policy control on the data stream sent by the application program.

In a fifth aspect, an embodiment of the present invention provides a network traffic identification system, including the feature extraction apparatus according to any possible implementation of the third aspect, and the traffic identification apparatus according to any possible implementation of the fourth aspect.

With the feature extraction apparatus, and network traffic identification method, apparatus, and system provided by embodiments of the present invention, the feature extraction apparatus receives an unidentified data stream sent by the traffic identification apparatus, and extracts behavior features of the unidentified data stream to obtain a traffic behavior feature of the unidentified data stream; and sends the traffic behavior feature to the traffic identification apparatus, so that the traffic identification apparatus identifies the unidentified data stream according to the traffic behavior feature. The technical solutions of the embodiments can be used to achieve high behavior feature extraction efficiency and improve the identification ratio of data streams in the existing network.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic flowchart of Embodiment 1 of a network traffic identification method according to the present invention;
FIG. 2 is a schematic flowchart of Embodiment 2 of a network traffic identification method according to the present invention;
FIG. 3 is a schematic structural diagram of an application scenario of Embodiment 3 of a network traffic identification method according to the present invention;
FIG. 4 is a schematic flowchart of Embodiment 3 of a network traffic identification method according to the present invention;
FIG. 5 is a schematic structural diagram of Embodiment 1 of a feature extraction apparatus according to the present invention;
FIG. 6 is a schematic structural diagram of Embodiment 1 of a traffic identification apparatus according to the present invention;
FIG. 7 is a schematic structural diagram of Embodiment 2 of a feature extraction apparatus according to the present invention;
FIG. 8 is a schematic structural diagram of Embodiment 2 of a traffic identification apparatus according to the present invention;
FIG. 9 is a schematic structural diagram of an embodiment of a traffic identification system according to the present invention;
FIG. 10 is a schematic structural diagram of internal deployment of a network traffic identification system according to the present invention;
FIG. 11 is a schematic structural diagram of cloud deployment of a network traffic identification system according to the present invention;
FIG. 12 is a schematic structural diagram of bypass deployment of a network traffic identification system according to the present invention;
FIG. 13 is a schematic structural diagram of open laboratory deployment of a network traffic identification system according to the present invention; and
FIG. 14 is a schematic structural diagram of enterprise network deployment of a network traffic identification system according to the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

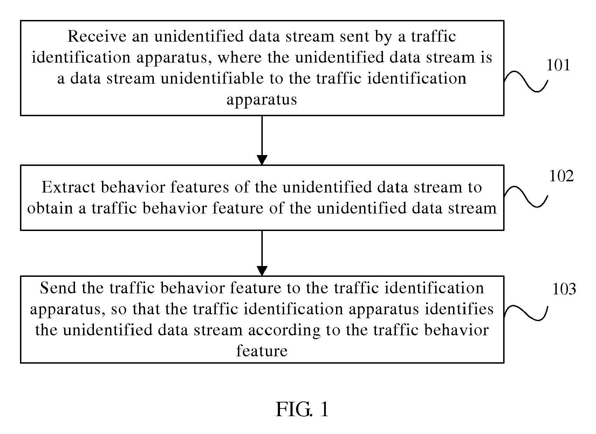

FIG. 1 is a schematic flowchart of Embodiment 1 of a network traffic identification method according to the present invention. The executor of the embodiment shown in FIG. 1 is a feature extraction apparatus that may be arranged independently or may also be integrated in a network element in a network data stream path. As shown in FIG. 1, the method in this embodiment includes the following:
S101. Receive an unidentified data stream sent by a traffic identification apparatus, where the unidentified data stream is a data stream unidentifiable to the traffic identification apparatus.

In a network system, multiple types of user equipments (User Equipment, UE) exist, for example, various user equipments such as a mobile phone, a personal computer (Personal computer, PC), and a tablet (PAD). Each user equipment has multiple application programs, and when a user uses an application program of the user equipment, the application program generates a data stream. Data streams generated by different application programs have different behavior features. When a data stream passes through the traffic identification apparatus, the traffic identification apparatus may determine, according to the behavior feature that the data stream has, an application program to which the data stream belongs; when the traffic identification apparatus cannot identify the data stream, the traffic identification apparatus sends the corresponding data stream as an unidentified data stream to the feature extraction apparatus. The application program generating the unidentified data stream is an unknown application program. The feature extraction apparatus receives the unidentified data stream sent by the traffic identification apparatus, where the unidentified data stream is a data stream generated by the unknown application program. Generally, the application program is a new application program in the network.

S102. Extract a behavior feature of the unidentified data stream to obtain a traffic behavior feature of the unidentified data stream.

The traffic behavior feature is a behavior feature that can uniquely identify a data stream, for example, A is a traffic behavior feature of a data stream of Tencent QQ application software, and B is a traffic behavior feature of a data stream of Microsoft service network (Microsoft Service Network, MSN) application software, and in this case, traffic behavior feature A is used to identify that the data stream is generated by Tencent QQ application software, and traffic behavior feature B is used to identify that the data stream is generated by MSN application software.

After receiving the unidentified data stream, the feature extraction apparatus extracts a behavior feature of the unidentified data stream to obtain a traffic behavior feature of the unidentified data stream.

Different from the prior art, a manual analysis manner is used in the prior art to extract a behavior feature, and largely depends on people's capability and experience, and the analysis efficiency is low.

S103. Send the traffic behavior feature to the traffic identification apparatus, so that the traffic identification apparatus identifies the unidentified data stream according to the traffic behavior feature.

After the feature extraction apparatus extracts a behavior feature of the unidentified data stream sent by the traffic identification apparatus, the feature extraction apparatus sends a traffic behavior feature to the traffic identification apparatus; the traffic identification apparatus identifies, according to the traffic behavior feature, an application program to which the unidentified data stream belongs. When a data stream from the same application program passes through the traffic identification apparatus again, the traffic identification apparatus may identify the corresponding data stream according to the traffic behavior feature, so as to determine the application program to which the data stream belongs.

In this embodiment, a feature extraction apparatus receives an unidentified data stream sent by a traffic identification apparatus, and extracts a behavior feature of the unidentified data stream to obtain a traffic behavior feature of the unidentified data stream; and sends the traffic behavior feature to the traffic identification apparatus, so that the traffic identification apparatus identifies the unidentified data stream according to the traffic behavior feature. The technical solution of this embodiment can be used to achieve high behavior feature extraction efficiency and improve the identification ratio of data streams in the existing network.

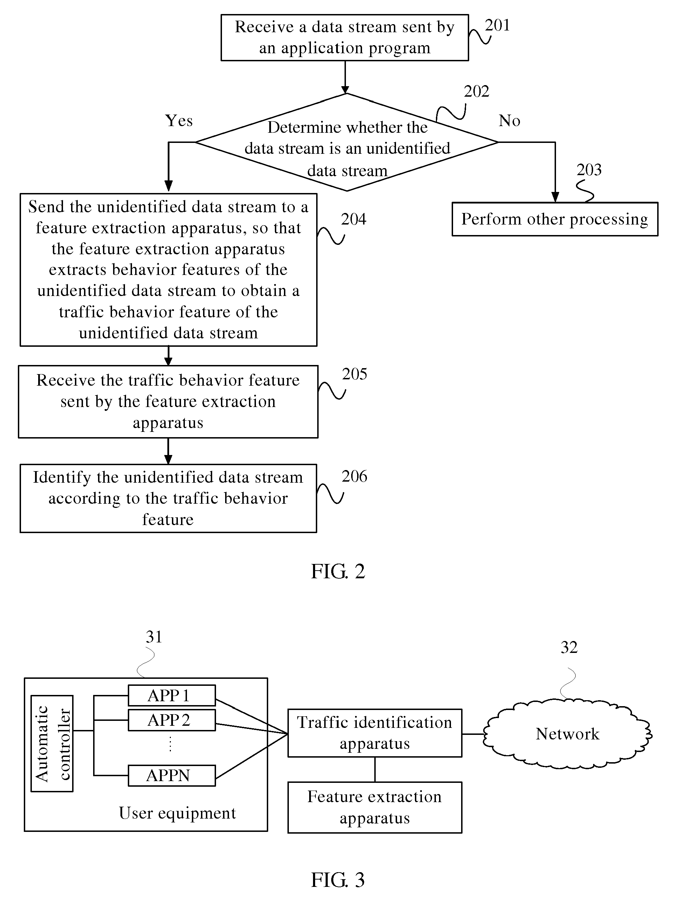

FIG. 2 is a schematic flowchart of Embodiment 2 of a network traffic identification method according to the present invention. The executor of the embodiment is a traffic identification apparatus that may be arranged independently or may also be integrated in a network element in a network data stream path. As shown in FIG. 2, the method in this embodiment includes the following:
S201. Receive a data stream sent by an application program.

When a user uses an application program on a user equipment, the application program generates a corresponding data stream, and a traffic identification apparatus receives the data stream sent by the application program.

S202. Determine whether the data stream is an unidentified data stream, and if so, execute step S204, or if not, execute step S203, where the unidentified data stream is a data stream generated by an unknown application program, or a data stream unidentifiable to the traffic identification apparatus.

After receiving the data stream sent by the application program, the traffic identification apparatus identifies the data stream according to a behavior feature of the data stream. In a feasible implementation, correspondencebetween a traffic behavior feature and an application program is stored in the traffic identification apparatus. The traffic identification apparatus may determine, according to the correspondence between a traffic behavior feature and an application program, the application program to which the data stream belongs; when no application program corresponding to the traffic behavior feature exists in the traffic identification apparatus, the traffic identification apparatus cannot identify the data stream, and therefore determine that the data stream is an unidentified data stream.

S203. Perform other processing.

In a feasible implementation, policy control, for example, blocking and flow limiting, may be performed on the data stream according to the application program to which the identified data stream belongs.

S204. Send the unidentified data stream to a feature extraction apparatus, so that the feature extraction apparatus extracts a behavior feature of the unidentified data stream to obtain the traffic behavior feature of the unidentified data stream.

The traffic identification apparatus sends the unidentified data stream to the feature extraction apparatus, so that the feature extraction apparatus extracts a behavior feature after receiving the unidentified data stream, so as to obtain the traffic behavior feature of the unidentified data stream.

S205. Receive the traffic behavior feature sent by the feature extraction apparatus.

After extracting the traffic behavior feature of the unidentified data stream, the feature extraction apparatus sends the traffic behavior feature to the traffic identification apparatus, and the traffic identification apparatus receives the traffic behavior feature sent by the feature extraction apparatus.

S206. Identify the unidentified data stream according to the traffic behavior feature.

The traffic identification apparatus identifies the unidentified data stream according to the traffic behavior feature. The traffic identification apparatus records the application program to which the unidentified data stream belongs before sending the unidentified data stream to the feature extraction apparatus. In a feasible implementation, when the user equipment sends a download application program request to an application server, the traffic identification apparatus records the mapping relationship between the user equipment identifier of the user equipment and the application program, where the user equipment identifier may be an Internet Protocol (Internet Protocol, IP) address. When the user uses the application program of the user equipment and the generated data stream passes through the traffic identification apparatus, if the traffic identification apparatus cannot identify the data stream, the traffic identification apparatus determines the application program corresponding to the data stream according to the user equipment identifier, and sends the unidentified data stream to the feature extraction apparatus. When receiving the traffic behavior feature sent by the feature extraction apparatus, the traffic identification apparatus establishes a correspondence between the traffic behavior feature and the previously recorded application program. When a data stream having the same traffic behavior feature passes through the traffic identification apparatus subsequently, the traffic identification apparatus may identify the unidentified data stream by querying a correspondence table between a traffic behavior feature and an application program, and determine the application program to which the data stream belongs. After the above operations are repeated multiple times, more correspondence between traffic behavior features and application programs are accumulated gradually in the traffic identification apparatus, and the identification ratio of data streams in the existing network by the traffic identification apparatus is also improved.

In this embodiment, a traffic identification apparatus receives a data stream sent by an application program; if the data stream is an unidentified data stream, sends the unidentified data stream to a feature extraction apparatus, so that the feature extraction apparatus extracts a behavior feature of the unidentified data stream to obtain a traffic behavior feature; receives the traffic behavior feature sent by the feature extraction apparatus; and identifies the unidentified data stream according to the traffic behavior feature. The technical solution of this embodiment can be used to achieve high behavior feature extraction efficiency and effectively improve the identification ratio of data streams in the existing network.

FIG. 3 is a schematic structural diagram of an application scenario of Embodiment 3 of a network traffic identification method according to the present invention. As shown in FIG. 3, a user equipment 31 may be a user equipment of any type such as a mobile phone, a PC, and a PAD. The user equipment may include an APP client, and there may be multiple user equipments, and FIG. 3 shows only one user equipment. A traffic identification apparatus is arranged on a network between the user equipment 31 and a network 32, and may be arranged independently or may also be integrated in other network elements. The user equipment exchanges information with other devices in the network 32 through a data stream that is generated when an automatic controller automatically runs an APP client, where the generated data stream passes through the traffic identification apparatus. The traffic identification apparatus sends the unidentified data stream to a feature extraction apparatus. The feature extraction apparatus extracts a traffic behavior feature, and sends the extracted traffic behavior feature to the traffic identification apparatus, so that the traffic identification apparatus identifies the data stream in the existing network according to the traffic behavior feature. The identification ratio of data streams in the existing network can be improved through multiple cycles.

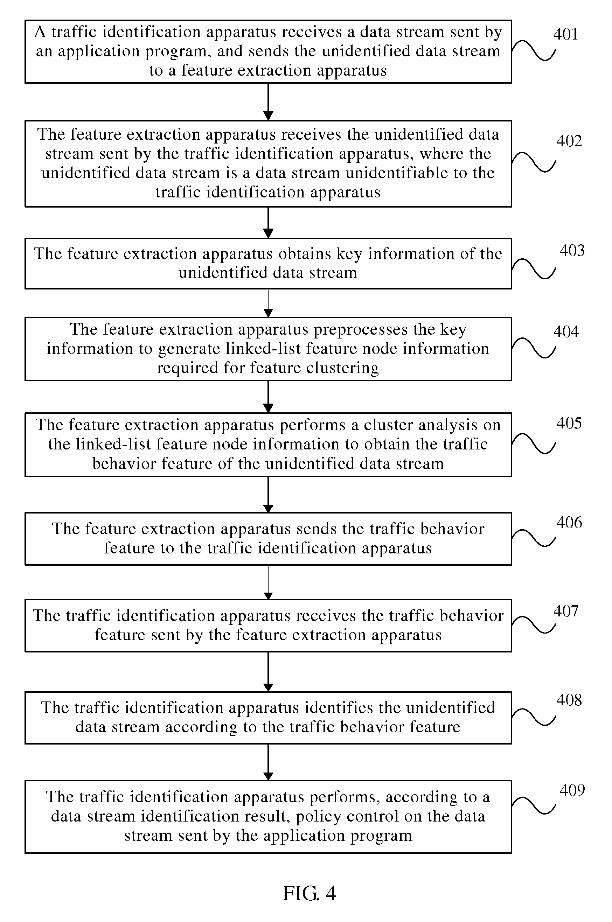

FIG. 4 is a schematic flowchart of Embodiment 3 of a network traffic identification method according to the present invention, and uses the application scenario shown in FIG. 3 as an example. As shown in FIG. 4, the method in this embodiment includes the following:
S401. A traffic identification apparatus receives a data stream sent by an application program, and sends the unidentified data stream to a feature extraction apparatus.

This step is similar to steps S201-S203 in the embodiment shown in FIG. 2, and is not further described herein.

S402. The feature extraction apparatus receives the unidentified data stream sent by the traffic identification apparatus, where the unidentified data stream is a data stream unidentifiable to the traffic identification apparatus.

This step is similar to step S101 in the embodiment shown in FIG. 1, and is not further described herein.

S403. The feature extraction apparatus obtains key information of the unidentified data stream.

Before obtaining key information of the unidentified data stream, the feature extraction apparatus may, optionally, further perform streaming node processing on the unidentified data stream.

In a feasible implementation, the feature extraction apparatus determines whether the unidentified data stream is a new data stream, and if so, creates streaming node information corresponding to the unidentified data stream, or if not, updates the existing streaming node information corresponding to the unidentified data stream with the new data stream.

Specifically, the feature extraction apparatus creates a stream table management structure; every time when a data packet of an unidentified data stream is received, the feature extraction apparatus first determines, according to information such as a quintuple, whether the data packet is a data packet of a new data stream, and if so, creates streaming node information corresponding to the unidentified data stream, or if not, updates the existing streaming node information corresponding to the unidentified data stream, thereby implementing streaming node processing on the unidentified data stream with the new data stream.

After the completion of the streaming node processing on the unidentified data stream, the feature extraction apparatus obtains the key information of the unidentified data stream, where the key information may be information such as quintuple information of each unidentified data stream, a service end IP of the data stream, timestamp, a key character string, and a part of data information.

S404. The feature extraction apparatus preprocesses the key information to generate linked-list feature node information for feature clustering.

Optionally, before this step is executed, the feature extraction apparatus further determines whether the amount of the unidentified data stream reaches a preset value, for example, the preset value is 10K. The preset value may be decided according to an actual condition, and is not limited by the present invention. If the amount of the unidentified data stream reaches the preset value, the key information of the unidentified data stream is preprocessed to generate the linked-list feature node information required for feature clustering.

The key information of the unidentified data stream is preprocessed to generate the linked-list feature node information required for feature clustering.

Optionally, in a first feasible implementation, feature identification dimension information is preset in the feature extraction apparatus; information corresponding to the feature identification dimension information is obtained from the key information of the unidentified data stream. For example, if the feature identification dimension information is port statistic information, it is only necessary to obtain a data packet including port information in the unidentified data stream; if the feature identification dimension information is quintuple information, it is only necessary to obtain a data packet including quintuple information in the unidentified data. In this implementation, the feature identification dimension information in the feature extraction apparatus is fixed and unchanged. For example, if the feature identification dimension information is load length statistic information and character string feature information, preprocessing corresponding to the load length statistic information and character string feature information can be performed on only the key information to generate the linked-list feature node information required for feature clustering; if other feature identification dimension information is required, a feature extraction code may be modified for the implementation.

In a second feasible implementation, the feature identification dimension information in the feature extraction apparatus is dynamically loadable, and different feature identification dimension information may be loaded or released according to actual applications. In this implementation, before the feature identification dimension information is loaded, a feature identification dimension information database is created. The required resources are requested, and main data structures are initialized; a configuration file is loaded, where the configuration file includes feature identification dimension information to be loaded and a default configuration item corresponding to the feature identification dimension information. Then the feature identification dimension information is loaded through an initialize (Inti) dynamic link library (Dynamic Link Library, DLL) interface. Specifically, a dynamic link library corresponding to the feature identification dimension information may be loaded, where the feature identification dimension information is used to describe feature information that needs to be extracted from the data stream, and includes at least one piece of the following information: load length statistic information; load length information that is collected according to the packet direction; character string feature information; statistic information of the timestamp of the data packet; statistic information of clustered packet length information; port statistic information; statistic information of protocol category information, statistic information of a push (Push, PSH) field in a Transmission Control Protocol (Transmission Control Protocol, TCP) header; statistic information of triplet information; and statistic information of the transmission layer protocol type. Then the key information is preprocessed by using the feature identification dimension information to generate the linked-list feature node information required for feature clustering.

S405. The feature extraction apparatus performs a cluster analysis on the linked-list feature node information to obtain the traffic behavior feature of the unidentified data stream.

Specifically, the feature extraction apparatus performs a cluster analysis on the linked-list feature node information by using a clustering algorithm, and compares feature nodes of the linked list by calling a compare (compare) DLL interface, so as to obtain feature keywords of the unidentified data stream and obtain the traffic behavior feature. To ensure that the obtained traffic behavior feature is more effective, before the traffic behavior feature is obtained, the method may further include screening the obtained feature keywords to reserve a valid feature keyword. Usually, in the feature keywords, a feature in a cluster set that has a high stream coverage ratio and many same features is used as the traffic behavior feature of the unidentified data stream.

If the second feasible implementation is used for preprocessing the key information, after the performing a cluster analysis for the linked-list feature node information to obtain the traffic behavior feature, the method further includes the following after the performing a cluster analysis on the linked-list feature node information to obtain the traffic behavior feature:
releasing the feature identification dimension information, and specifically, releasing a dynamic link library corresponding to the feature identification dimension information, and generally releasing feature identification dimension information that is not used any longer, where the feature identification dimension information may be released by using a free (Free) DLL interface.

S406. The feature extraction apparatus sends the traffic behavior feature to the traffic identification apparatus.

Optionally, to ensure that the feature extraction apparatus extracts a high-quality traffic behavior feature, before the feature extraction apparatus sends the traffic behavior feature to the traffic identification apparatus, the feature extraction apparatus further determines whether the traffic behavior feature satisfies a quality decision condition; and if so, sends the traffic behavior feature satisfying the quality decision condition to the traffic identification apparatus; or if not, discards the traffic behavior feature and reloads the feature identification dimension information according to the configuration file, or modifies only parameter information of the feature identification dimension information without changing the feature identification dimension information, and extracts traffic a behavior feature until a traffic behavior feature satisfying the quality decision condition is extracted.

Determining whether the traffic behavior feature satisfies the quality decision condition specifically includes: determining whether a feature coverage ratio of the traffic behavior feature is greater than a first threshold, or determining whether coverage traffic of the traffic behavior feature is greater than a second threshold, or determining whether a bit error rate of the traffic behavior feature is greater than a third threshold, or determining whether the traffic behavior feature satisfies a combination of any two of the above three conditions or satisfies all the above three conditions, where the first threshold, second threshold, and third threshold are preset according to an actual application environment.

S407. The traffic identification apparatus receives the traffic behavior feature sent by the feature extraction apparatus.

This step is similar to step S205 in the embodiment shown in FIG. 2, and is not further described herein.

S408. The traffic identification apparatus identifies the unidentified data stream according to the traffic behavior feature.

After the application program to which the unidentified data stream is identified, step S409 may be further executed.

S409. The traffic identification apparatus performs, according to a data stream identification result, policy control on the data stream sent by the application program.

Specifically, policy control such as blocking and flow limiting is performed on the data stream according to the application program to which the data stream belongs.

In this embodiment, a traffic identification apparatus sends an unidentified data stream to a feature extraction apparatus; the feature extraction apparatus receives the unidentified data stream, obtains key information of the unidentified data stream, preprocesses the key information to generate linked-list feature node information for feature clustering, and performs a cluster analysis on the linked-list feature node information to obtain a data stream behavior feature of the unidentified data stream; the feature extraction apparatus sends the traffic behavior feature to the traffic identification apparatus; and the traffic identification apparatus identifies the unidentified data stream according to the traffic behavior feature. In this embodiment, the traffic behavior feature is extracted by the feature extraction apparatus; therefore, the efficiency is high, and the identification ratio of data streams in the existing network can be improved. In the process of extracting the traffic behavior feature, the feature extraction apparatus may dynamically load and release multiple pieces of feature identification dimension information, which avoids modifying the feature extraction code when the conventional method is used to add feature identification dimension information, and further improves traffic behavior feature extraction efficiency; screen the obtained feature keywords to reserve a valid feature keyword as the traffic behavior feature of the unidentified data stream; in addition, before sending the traffic behavior feature to the traffic identification apparatus, further determine whether the traffic behavior feature satisfies a quality decision condition; and send the traffic behavior feature satisfying the quality decision condition to the traffic identification apparatus, which further improves quality of the traffic behavior feature, so that the traffic identification apparatus identifies the data stream more accurately according to the traffic behavior feature. The traffic identification apparatus performs, according to a positive result, policy control on the data stream sent by the application program, so as to properly allocate network resources and improve network performance.

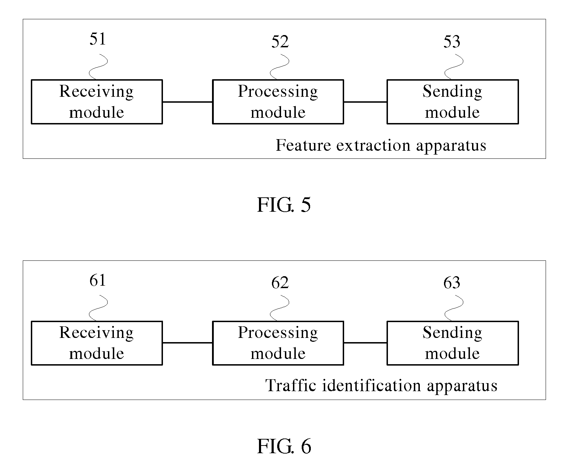

FIG. 5 is a schematic structural diagram of Embodiment 1 of a feature extraction apparatus according to the present invention. The apparatus in this embodiment may be arranged independently or may also be integrated in other network elements. As shown in FIG. 5, the apparatus in this embodiment includes a receiving module 51, a processing module 52, and a sending module 53. The receiving module 51 is configured to receive an unidentified data stream sent by a traffic identification apparatus, where the unidentified data stream is a data stream generated by an unknown application program or a data stream unidentifiable to the traffic identification apparatus. The processing module 52 is configured to extract a behavior feature of the unidentified data stream to obtain a traffic behavior feature of the unidentified data stream, where the traffic behavior feature is a behavior feature that can uniquely identify the unidentified data stream. The sending module 53 is configured to send the traffic behavior feature to the traffic identification apparatus, so that the traffic identification apparatus identifies the unidentified data stream according to the traffic behavior feature.

The apparatus in this embodiment is configured to execute the technical solution of the method embodiment shown in FIG. 1. The implementation principles and technical effects are similar, and are not further described herein.

In the above embodiment, the processing module 52 specifically includes: an obtaining unit, configured to obtain key information of the unidentified data stream;
a preprocessing unit, configured to preprocess the key information obtained by the obtaining unit to generate linked-list feature node information for feature clustering; and
a cluster analysis unit, configured to perform a cluster analysis on the linked-list feature node information to obtain the traffic behavior feature of the unidentified data stream.

In the above embodiment, the preprocessing unit is specifically configured to: if the amount of the unidentified data stream reaches a preset value, preprocess the key information to generate the linked-list feature node information required for feature clustering; and the cluster analysis unit is specifically configured to perform a cluster analysis on the linked-list feature node information to obtain feature keywords of the unidentified data stream, and screen the obtained feature keywords to reserve a valid feature keyword as the traffic behavior feature of the unidentified data stream.

In the above embodiment, the preprocessing unit is specifically configured to: load feature identification dimension information, where the feature identification dimension information is used to describe feature information that needs to be extracted from the data stream; obtain, from the key information of the unidentified data stream, information corresponding to the feature identification dimension information, and convert the obtained information into the linked-list feature node information required for feature clustering; and release the feature identification dimension information.

In the above embodiment, the sending module 53 is specifically configured to determine whether the traffic behavior feature satisfies a quality decision condition, and if so, send the traffic behavior feature to the traffic identification apparatus, or if not, discard the traffic behavior feature.

In the above embodiment, the processing module 52 is specifically configured to: determine whether a feature coverage ratio of the traffic behavior feature is greater than a first threshold, and if so, send the traffic behavior feature to the traffic identification apparatus, or if not, discard the traffic behavior feature; and/or determine whether coverage traffic of the traffic behavior feature is greater than a second threshold, and if so, send the traffic behavior feature to the traffic identification apparatus, or if not, discard the traffic behavior feature; and/or determine whether a wrong identification ratio of the traffic behavior feature is greater than a third threshold, and if so, send the traffic behavior feature to the traffic identification apparatus, or if not, discard the traffic behavior feature.

The apparatus in this embodiment may be configured to execute the technical solution of the method embodiment shown in FIG. 4. The implementation principles and technical effects are similar, and are not further described herein. For details, reference may be made to the related description of the feature extraction apparatus in the embodiment shown in FIG. 4.

FIG. 6 is a schematic structural diagram of Embodiment 1 of a traffic identification apparatus according to the present invention. As shown in FIG. 6, the apparatus in this embodiment includes a receiving module 61, a sending module 62, and a processing module 63. The receiving module 61 is configured to receive a data stream sent by an application program. The sending module 62 is configured to: if the data stream is an unidentified data stream, send the unidentified data stream to a feature extraction apparatus, so that the feature extraction apparatus extracts a behavior feature of the unidentified data stream to obtain a traffic behavior feature of the unidentified data stream. The receiving module 61 is further configured to receive the traffic behavior feature sent by the feature extraction apparatus. The processing module 63 is configured to identify the unidentified data stream according to the traffic behavior feature.

The apparatus in this embodiment is configured to execute the technical solution of the method embodiment shown in FIG. 2. The implementation principles and technical effects are similar, and are not further described herein.

In the above embodiment, the processing module 63 is specifically configured to identify the unidentified data stream by querying a correspondence table between a traffic behavior feature and an application program.

In the above embodiment, the processing module 63 is further configured to: after identifying the unidentified data stream according to the traffic behavior feature, perform, according to a data stream identification result, policy control on the data stream sent by the application program.

The apparatus in this embodiment may be configured to execute the technical solution of the method embodiment shown in FIG. 4. The implementation principles and technical effects are similar, and are not further described herein. For details, reference may be made to the related description of the traffic identification apparatus in the embodiment shown in FIG. 4.

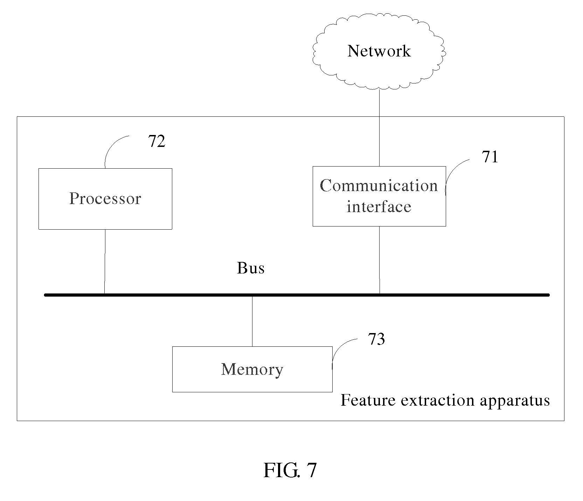

FIG. 7 is a schematic structural diagram of Embodiment 2 of a feature extraction apparatus according to the present invention. As shown in FIG. 7, the apparatus in this embodiment includes a communication interface 71, at least one processor 72, and a memory 73, where the processor 72, memory 73, and communication interface 71 are connected through a bus and implement mutual communication. The bus may be an industry standard architecture (Industry Standard Architecture, ISA) bus, a peripheral component interconnect (Peripheral Component, PCI) bus, or an extended industry standard architecture (Extended Industry Standard Architecture, EISA) bus, and so on. The bus may be classified into an address bus, a data bus, a control bus, and so on. For ease of indication, the bus is indicated by only a solid line in FIG. 7, which does not mean that only one bus or one type of bus exists. The communication interface 71 is configured to receive an unidentified data stream sent by a traffic identification apparatus, where the unidentified data stream is a data stream generated by an unknown application program, or a data stream unidentifiable to the traffic identification apparatus. Specifically, the communication interface 71 may be a component or unit that may implement data transmitting and receiving functions, such as a network interface, a USB interface, a radio frequency unit, an antenna, and a wi-fi communication module. The memory 73 is configured to store an executable program code, where the program code includes a computer operation instruction. The memory 73 may include a high-speed RAM, and may also include a non-volatile memory (non-volatile memory), for example, at least one disk storage. In an embodiment, the processor 72 reads the executable program code stored in the memory 73 to run a program corresponding to the executable program code so as to: extract a behavior feature of the unidentified data stream to obtain a traffic behavior feature of the unidentified data stream, where the traffic behavior feature is a behavior feature that can uniquely identify a data stream; and the communication interface 71 is further configured to send the traffic behavior feature to the traffic identification apparatus, so that the traffic identification apparatus can identify the unidentified data stream according to the traffic behavior feature.

The apparatus in this embodiment is configured to execute the technical solution of the method embodiment shown in FIG. 1. The implementation principles and technical effects are similar, and are not further described herein.

The processor 72 may be a central processing unit (Central Processing Unit, CPU) or an application specific integrated circuit (Application Specific Integrated Circuit, ASIC), or is configured as one or multiple integrated circuits for implementing the embodiments of the present invention.

In the above embodiment, the processor 72 is specifically configured to: read and execute the code in the memory 73 to obtain key information of the unidentified data stream; preprocess the key information to generate linked-list feature node information for feature clustering; and perform a cluster analysis on the linked-list feature node information to obtain the traffic behavior feature of the unidentified data stream.

It should be noted that the above processor 72 not only has the above function, but also may be configured to execute other procedures in the method embodiments, which is not further described herein.

The above procedure is not further described herein. For details, reference may be made to the above method and apparatus embodiments. The apparatus in this embodiment may be configured to execute the technical solution of the method embodiment shown in FIG. 4. The implementation principles and technical effects are similar, and are not further described herein. For details, reference may be made to the related description of the feature extraction apparatus in the embodiment shown in FIG. 4.

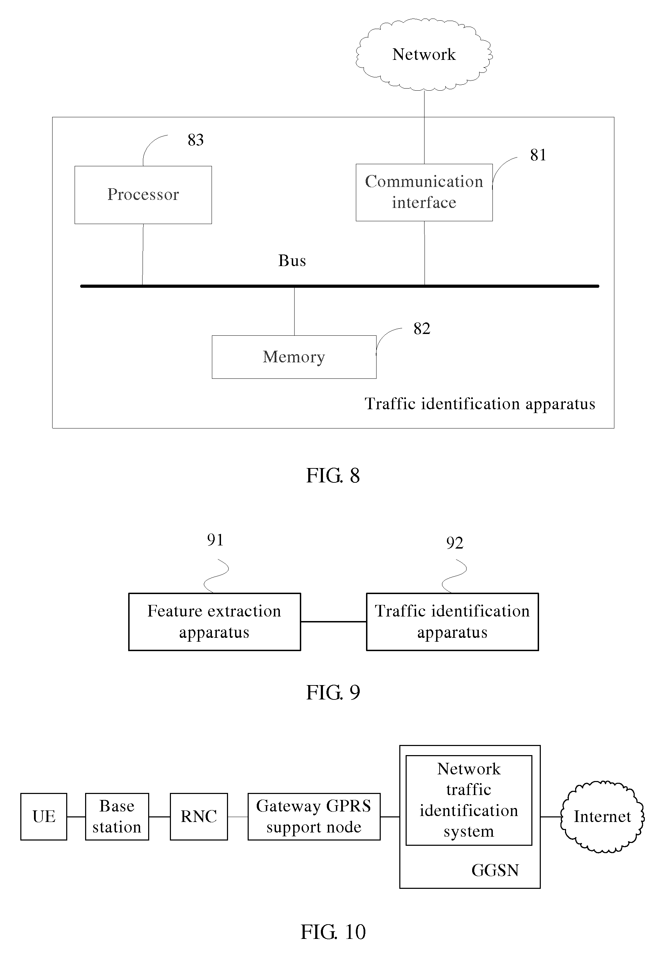

FIG. 8 is a schematic structural diagram of Embodiment 2 of a traffic identification apparatus according to the present invention. As shown in FIG. 8, the apparatus in this embodiment includes a communication interface 81, a memory 82, and at least one processor 83, where the processor 83, memory 82, and communication interface 81 are connected through a bus and implement mutual communication. The bus may be an ISA bus, a PCI bus, or an EISA bus, and so on. The bus may be classified into an address bus, a data bus, a control bus, and so on. For ease of indication, the bus is indicated by only a solid line in FIG. 8, which does not mean that only one bus or one type of bus exists. The communication interface 81 is configured to receive a data stream sent by an application program; and if the data stream is an unidentified data stream, send the unidentified data stream to a feature extraction apparatus, so that the feature extraction apparatus extracts a behavior feature of the unidentified data stream to obtain a traffic behavior feature of the unidentified data stream, where the unidentified data stream is a data stream generated by an unknown application program, or a data stream unidentifiable to the traffic identification apparatus. The communication interface 81 is further configured to receive the traffic behavior feature sent by the feature extraction apparatus. Specifically, the communication interface 81 may be a component or unit that may implement data transmitting and receiving functions, such as a network interface, a USB interface, a radio frequency unit, an antenna, and a wi-fi communication module. The memory 82 is configured to store an executable program code, where the program code includes a computer operation instruction. The memory 82 may include a high-speed RAM and may also include a non-volatile memory (non-volatile memory), for example, at least one disk storage. In an embodiment, the processor 83 reads the executable program code stored in the memory 82 to run the program corresponding to the executable program code so as to: identify the unidentified data stream according to the traffic behavior feature. The processor 83 may be a central processing unit (Central Processing Unit, CPU) or an application specific integrated circuit (Application Specific Integrated Circuit, ASIC), or is configured as one or multiple integrated circuits for implementing the embodiments of the present invention.

It should be noted that the above processor 83 not only has the above function, but also may be configured to execute other procedures in the method embodiments, which is not further described herein.

The above procedure is not further described herein. For details, reference may be made to the above method and apparatus embodiments.

The apparatus in this embodiment is configured to execute the technical solution of the method embodiment shown in FIG. 2. The implementation principles and technical effects are similar, and are not further described herein.

In the above embodiment, the processor 83 is specifically configured to identify the unidentified data stream by querying a correspondence table between a traffic behavior feature and an application program.

In the above embodiment, the processor 83 is further configured to: after identifying the unidentified data stream according to the traffic behavior feature, perform, according to a data stream identification result, policy control on the data stream sent by the application program.

The apparatus in this embodiment may be configured to execute the technical solution of the method embodiment shown in FIG. 4. The implementation principles and technical effects are similar, and are not further described herein. For details, reference may be made to the related description of the traffic identification apparatus in the embodiment shown in FIG. 4.

FIG. 9 is a schematic structural diagram of an embodiment of a traffic identification system according to the present invention. As shown in FIG. 9, the system in this embodiment includes: a feature extraction apparatus 91 and a traffic identification apparatus 92, and the system may be deployed in different network environments. FIG. 10 is a schematic structural diagram of internal deployment of a network traffic identification system according to the present invention. As shown in FIG. 10, the internal deployment may be integrating the network traffic identification system into a core network element, where the core network element may be a gateway general packet radio service support node (Gateway General Packet Radio Service Support Node, GGSN), a radio network controller (Radio Network Controller, RNC), and so on. FIG. 10 shows that the network traffic identification system is integrated in the GGSN. The working principles of the apparatuses in the network traffic identification system are not further described herein. For details, reference may be made to the embodiment shown in FIG. 4.

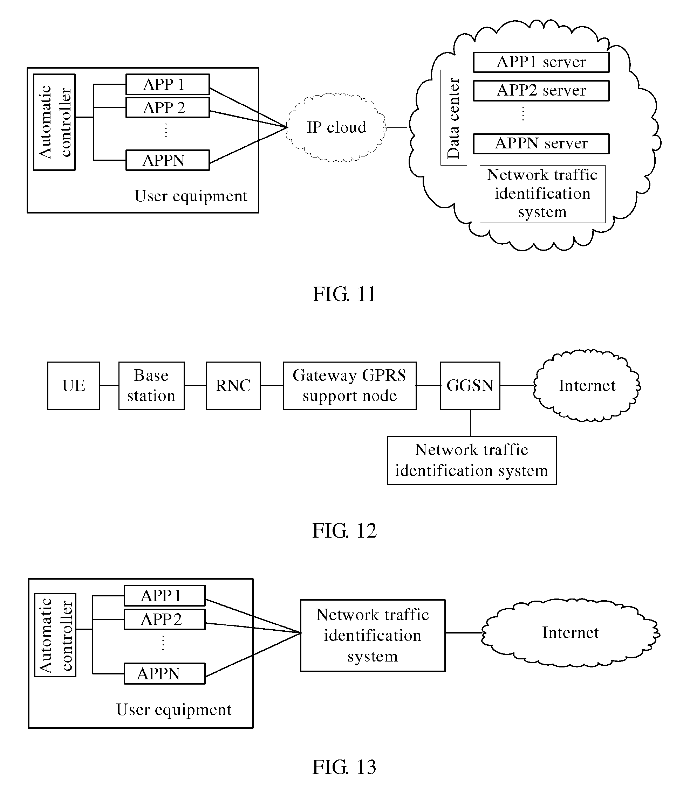

FIG. 11 is a schematic structural diagram of cloud deployment of a network traffic identification system according to the present invention. As shown in FIG. 11, cloud deployment may be deploying a network traffic identification system on the cloud server side. The working principles of the apparatuses in the network traffic identification system are not further described herein. For details, reference may be made to the embodiment shown in FIG. 4. Because all application software servers are located on the cloud server side, the traffic identification system is deployed on the cloud server side, which may satisfy traffic behavior feature extraction in a cloud service manner to identify the data stream in the existing network.

FIG. 12 is a schematic structural diagram of bypass deployment of a network traffic identification system according to the present invention. As shown in FIG. 12, bypass deployment is arranging the network traffic identification system independently to connect to a core network element, where the core network element may be a GGSN, an RNC, a core router, and so on. The working principles of the apparatuses in the network traffic identification system are not further described herein. For details, reference may be made to the embodiment shown in FIG. 4. The bypass deployment manner can reduce the impact of the traffic identification system on processing performance of the core network element.

FIG. 13 is a schematic structural diagram of open laboratory deployment of a network traffic identification system according to the present invention. As shown in FIG. 13, the open laboratory deployment may integrate the network traffic identification system into a router, or may also arrange the network traffic identification system independently in an open laboratory network environment to identify the data stream in the existing network.

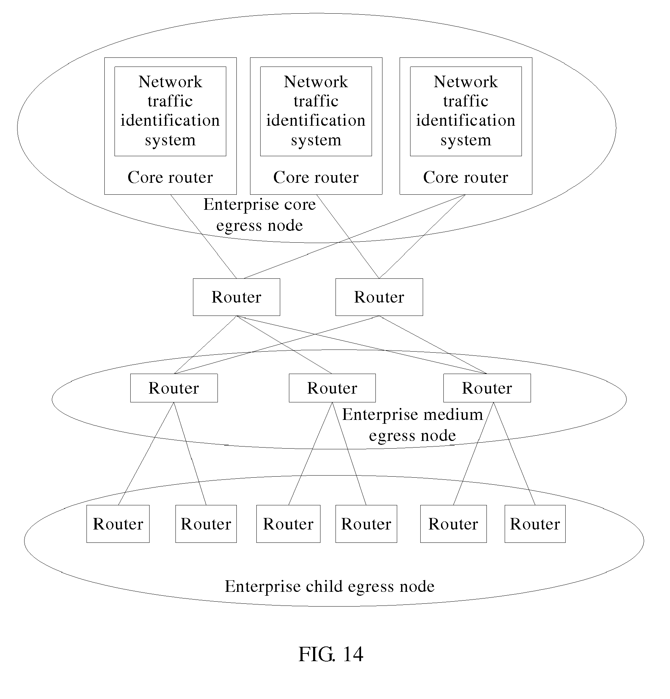

FIG. 14 is a schematic structural diagram of enterprise network deployment of a network traffic identification system according to the present invention. As shown in FIG. 14, the enterprise network deployment may deploy the network traffic identification system in an enterprise core router, namely, an enterprise core egress node. The network traffic identification system may support traffic behavior feature extraction for new protocols and new applications of an enterprise network to identify the data stream in the existing enterprise network.

By deploying the network traffic identification system of this embodiment of the present invention in different network environments, data streams in different network environments are identified, and the identification ratio of data streams in the existing network is improved.

Persons of ordinary skill in the art may understand that, all or a part of the steps of the foregoing method embodiments may be implemented by a program instructing relevant hardware. The foregoing programs may be stored in a computer readable storage medium. When the program runs, the foregoing steps of the method embodiments are performed. The foregoing storage medium includes various media capable of storing program codes, such as a ROM, a RAM, a magnetic disk, or an optical disc.

Finally, it should be noted that the foregoing embodiments are merely intended for describing the technical solutions of the present invention, other than limiting the present invention. Although the present invention is described in detail with reference to the foregoing embodiments, persons of ordinary skill in the art should understand that they may still make modifications to the technical solutions described in the foregoing embodiments, or make equivalent replacements to some or all the technical features thereof, without departing from the scope of the technical solutions of the embodiments of the present invention.

## Claims

1. A network traffic identification method, comprising:
receiving an unidentified data stream sent by a traffic identification apparatus, wherein the unidentified data stream is a data stream unidentifiable to the traffic identification apparatus;
extracting a behavior feature of the unidentified data stream to obtain a traffic behavior feature of the unidentified data stream, wherein the traffic behavior feature is a behavior feature that can uniquely identify the unidentified data stream; and
sending the traffic behavior feature to the traffic identification apparatus, so that the traffic identification apparatus identifies the unidentified data stream according to the traffic behavior feature.

2. The method according to claim 1, wherein the extracting a behavior feature of the unidentified data stream to obtain a traffic behavior feature of the unidentified data stream comprises:
obtaining key information of the unidentified data stream;
preprocessing the key information to generate linked-list feature node information required for feature clustering; and
performing a cluster analysis on the linked-list feature node information to obtain the traffic behavior feature of the unidentified data stream.

3. The method according to claim 2, wherein: the preprocessing the key information to generate linked-list feature node information for feature clustering comprises:
if the amount of the unidentified data stream reaches a preset value, preprocessing the key information of the unidentified data stream to generate the linked-list feature node information required for feature clustering;
the performing a cluster analysis on the linked-list feature node information to obtain the traffic behavior feature of the unidentified data stream comprises:
performing a cluster analysis on the linked-list feature node information to obtain feature keywords of the unidentified data stream; and
screening the obtained feature keywords to reserve a valid feature keyword as the traffic behavior feature of the unidentified data stream.

4. The method according to claim 2 or 3, wherein the preprocessing the key information of the unidentified data stream to generate the linked-list feature node information required for feature clustering comprises:
loading feature identification dimension information, wherein the feature identification dimension information is used to describe feature information that needs to be extracted from the data stream;
obtaining, from the key information of the unidentified data stream, information corresponding to the feature identification dimension information, and converting the obtained information into the linked-list feature node information required for feature clustering; and
releasing the feature identification dimension information.

5. The method according to any one of claims 2 to 4, wherein the sending the traffic behavior feature to the traffic identification apparatus comprises:
determining whether the traffic behavior feature satisfies a quality decision condition, and if so, sending the traffic behavior feature to the traffic identification apparatus, or if not, discarding the traffic behavior feature.

6. The method according to claim 5, wherein the determining whether the traffic behavior feature satisfies a quality decision condition comprises:
determining whether a feature coverage ratio of the traffic behavior feature is greater than a first threshold; and/or
determining whether coverage traffic of the traffic behavior feature is greater than a second threshold; and/or
determining whether a wrong identification ratio of the traffic behavior feature is greater than a third threshold.

7. A network traffic identification method, comprising:
receiving a data stream sent by an application program;
if the data stream is an unidentified data stream, sending the unidentified data stream to a feature extraction apparatus, so that the feature extraction apparatus extracts a behavior feature of the unidentified data stream to obtain a traffic behavior feature of the unidentified data stream;
receiving the traffic behavior feature sent by the feature extraction apparatus; and
identifying the unidentified data stream according to the traffic behavior feature.

8. The method according to claim 7, wherein the identifying the unidentified data stream according to the traffic behavior feature comprises:
identifying the unidentified data stream by querying a correspondence table, the correspondence table including the correspondence between the traffic behavior feature and the application program.

9. The method according to claim 7 or 8, wherein after the identifying the unidentified data stream according to the traffic behavior feature, the method further comprises:
performing, according to a data stream identification result, policy control on the data stream sent by the application program.

10. A feature extraction apparatus, comprising:
a receiving module, configured to receive an unidentified data stream sent by a traffic identification apparatus, wherein the unidentified data stream is a data stream unidentifiable to the traffic identification apparatus;
a processing module, configured to extract a behavior feature of the unidentified data stream to obtain a traffic behavior feature of the unidentified data stream, wherein the traffic behavior feature is a behavior feature that can uniquely identify the unidentified data stream; and
a sending module, configured to send the traffic behavior feature to the traffic identification apparatus, so that the traffic identification apparatus identifies the unidentified data stream according to the traffic behavior feature.

11. The apparatus according to claim 10, wherein the processing module specifically comprises:
an obtaining unit, configured to obtain key information of the unidentified data stream;
a preprocessing unit, configured to preprocess the key information obtained by the obtaining unit to generate linked-list feature node information required for feature clustering; and
a cluster analysis unit, configured to perform a cluster analysis on the linked-list feature node information to obtain the traffic behavior feature of the unidentified data stream.

12. The apparatus according to claim 11, wherein: the preprocessing unit is specifically configured to: if the amount of the unidentified data stream reaches a preset value, preprocess the key information of the unidentified data stream to generate the linked-list feature node information required for feature clustering; and
the cluster analysis unit is specifically configured to perform a cluster analysis on the linked-list feature node information to obtain feature keywords of the unidentified data stream, and screen the obtained feature keywords to reserve a valid feature keyword as the traffic behavior feature of the unidentified data stream.

13. The apparatus according to claim 11 or 12, wherein the preprocessing unit is specifically configured to: load feature identification dimension information, wherein the feature identification dimension information is used to describe feature information that needs to be extracted from the data stream; obtain, from the key information of the unidentified data stream, information corresponding to the feature identification dimension information, and convert the obtained information into the linked-list feature node information required for feature clustering; and release the feature identification dimension information.

14. The apparatus according to any one of claims 11 to 13, wherein the sending module is specifically configured to determine whether the traffic behavior feature satisfies a quality decision condition, and if so, send the traffic behavior feature to the traffic identification apparatus, or if not, discard the traffic behavior feature.

15. The apparatus according to claim 14, wherein the processing module is specifically configured to: determine whether a feature coverage ratio of the traffic behavior feature is greater than a first threshold, and if so, send the traffic behavior feature to the traffic identification apparatus, or if not, discard the traffic behavior feature; and/or
determine whether coverage traffic of the traffic behavior feature is greater than a second threshold, and if so, send the traffic behavior feature to the traffic identification apparatus, or if not, discard the traffic behavior feature; and/or
determine whether a wrong identification ratio of the traffic behavior feature is greater than a third threshold, and if so, send the traffic behavior feature to the traffic identification apparatus, or if not, discard the traffic behavior feature.

16. A traffic identification apparatus, comprising:
a receiving module, configured to receive a data stream sent by an application program;
a sending module, configured to: if the data stream is an unidentified data stream, send the unidentified data stream to a feature extraction apparatus, so that the feature extraction apparatus extracts a behavior feature of the unidentified data stream to obtain a traffic behavior feature of the unidentified data stream;
wherein the receiving module is further configured to receive the traffic behavior feature sent by the feature extraction apparatus; and
a processing module, configured to identify the unidentified data stream according to the traffic behavior feature received by the receiving module.

17. The apparatus according to claim 16, wherein the processing module is specifically configured to identify the unidentified data stream by querying a correspondence table, the correspondence table including the correspondence between the traffic behavior feature and the application program.

18. The apparatus according to claim 16 or 17, wherein the processing module is further configured to: after identifying the unidentified data stream according to the traffic behavior feature, perform, according to a data stream identification result, policy control on the data stream sent by the application program.

19. A network traffic identification system, comprising the feature extraction apparatus according to any one of claims 10 to 15, and the traffic identification apparatus according to any one of claims 16 to 18.
